# EUROPÄISCHE PATENTSCHRIFT

(11) **EP 0 592 873 B1**
(45) Veröffentlichungstag und Bekanntmachung des Hinweises auf die Patenterteilung: **22.04.1998**
(21) Anmeldenummer: 93115779.6
(22) Anmeldetag: 30.09.1993
(51) Int. Cl.: G02B 6/12, G02B 6/34

(54) **Integrierter optischer Polarisationsstrahlenteiler**
Integrated optical polarization beam-splitter
Séparateur des polarisations en optique intégrée

(30) Priorität: 13.10.1992 DE 4234486
(43) Veröffentlichungstag der Anmeldung: 20.04.1994
(73) Patentinhaber: ROBERT BOSCH GMBH, 70442 Stuttgart (DE)
(72) Erfinder: Schwander, Thomas, Dipl.-Ing., D-71522 Backnang (DE); Stuwe, Peter, Dipl.-Ing., D-38126 Braunschweig (DE)

(56) Entgegenhaltungen:
- EP-A- 0 350 110
- DE-C- 3 108 742
- JOURNAL OF LIGHTWAVE TECHNOLOGY., Bd.10, Nr.10, Oktober 1992, NEW YORK US Seiten 1334 - 1337 THYAGARAJAN ET AL.
- IEEE PHOTONICS TECHNOLOGY LETTERS, Bd.2, Nr.2, Februar 1990, NEW YORK Seite 114-115 ALBRECHT ET AL.
- OPTICS LETTERS, Bd.14, Nr.23, 1. Dezember 1989, WASHINGTON US Seiten 1333 - 1335 THYAGARAJAN ET AL.

## Beschreibung

Die Erfindung betrifft eine Anordnung zum Zerlegen eines optischen Eingangssignals in zwei Signale mit zueinander orthogonaler Polarisation, die aus zwei miteinander zu verkoppelnden Wellenleitern besteht, zwischen denen in einem Koppelbereich ein weiterer Wellenleiterabschnitt angeordnet ist.

Aus der DE 31 08 742 C2 ist ein selektiver Richtkoppler bekannt, der aus zwei miteinander zu verkoppelnden planaren Wellenleitern besteht, zwischen denen ein weiterer Wellenleiterabschnitt derart angeordnet ist, daß die Koppelwelle des mittleren Wellenleiterabschnittes bei der gewünschten Koppelfrequenz phasensynchron mit den Wellen in den beiden anderen Wellenleitern ist und daß die beiden zu verkoppelnden Wellenleiter jeweils nur über den mittleren Wellenleiter verkoppelt sind.

Genauere Angaben über die Dimensionierung des Richtkopplers sind aus der DE 31 08 742 C2 zu entnehmen.

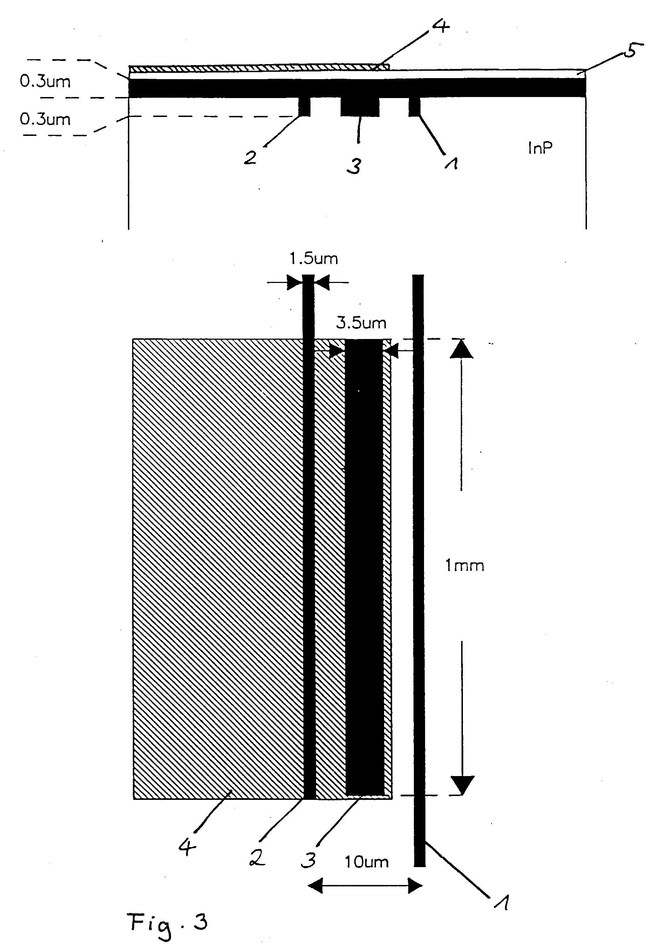

Aus V.L. Gupta und E.K. Sharma "Metal-clad and absorptive multilayer waveguides: an accurate perturbation analysis" in J. Opt. Soc. Am. A/Bd. 9, Nr. 6/Juni 1992, Seite 953 - 956 ist es bekannt, wie sich eine Metallbeschichtung auf einem planaren Wellenleiter auf Wellen unterschiedlicher Polarisation auswirkt. Der Einfluß der Dicke der Pufferschicht zwischen Wellenleiter und Metall auf die Verluste der Wellen, der unterschiedlichen Polarisationen ist insbesondere in Figur 3 auf Seite 955 dargestellt.

Es ist Aufgabe der Erfindung eine Anordnung zum Zerlegen eines optischen Eingangssignals in zwei Signale mit zueinander orthogonalen Polarisationen anzugeben, die möglichst einfach aufgebaut ist.

Die Aufgabe wird durch eine Anordnung mit den Merkmalen des Patentanspruches 1 gelöst. Vorteilhafte Weiterbildungen sind in den Unteransprüchen angegeben.

Die erfindungsgemäße Anordnung weist die Merkmale auf, die von einem frequenz selektiven Richtkoppler gemäß der DE 31 08 742 C2 und der DE 41 11 095 Cl bekannt sind. Zusätzlich weist die erfindungsgemäße Anordnung eine Beschichtung aus einem leitenden Material auf, die zumindest den mittleren planaren Wellenleiterabschnitt teilweise überdeckt. Diese Beschichtung, die beispielsweise aus einem Metall ist und aufgedampft oder aufgesputtert wird, bewirkt, daß der effektive Brechungsindex im mittleren Wellenleiterabschnitt für EH-Wellen stark abgesenkt ist. Der effektive Brechungsindex im mittleren Wellenleiterabschnitt für HE-Wellen wird dagegen durch die leitende Beschichtung kaum verändert. Somit ergibt sich, daß bei einem zufällig polarisierten optischen Eingangssignal, die EH-Wellen vom ersten Wellenleiter kaum auf den dritten Wellenleiterabschnitt überkoppeln, während die HE-Wellen nahezu vollständig auf den mittleren Wellenleiterabschnitt und von da auf den zweiten Wellenleiter überkoppeln. Nach der Anordnung, die man auch als Polarisationsweiche bezeichnen kann, befindet sich also ein Signal erster Polarisation (EH-Wellen) auf dem ersten Wellenleiter und ein Signal zweiter Polarisation (HE-Wellen) auf dem zweiten Wellenleiter. Die Polarisationsweiche weist eine geringe Durchgangsdämpfung und eine größere laterale Trennung der Ausgangswellenleiter auf. Es wird ermöglicht, Bauelemente direkt hinter den Ausgangswellenleiter anzuordnen, ohne diese weiter auseinander zu führen.
Wellenleiterkrümmungen werden also weitgehend vermieden. Eine kompakte Integration mit optoelektronischen Bauelementen auf einem Chip wird ermöglicht. Wenn die Beschichtung nur den mittleren Wellenleiterabschnitt teilweise überdeckt, ist ein symmetrischer Aufbau der Polarisationsweiche möglich. Die Herstellung einer symmetrischen Struktur erlaubt hohe Fertigungstoleranzen, was für die Herstellung von Vorteil ist.

Eine besonders hohe Polarisationstrennung ist zu erwarten, wenn auch der zweite Wellenleiter im Koppelbereich von der Beschichtung überdeckt wird.

Selbst für die Anordnung, bei der nur der mittlere Wellenleiterabschnitt zum Teil von der Beschichtung bedeckt ist, ist nach einer Abschätzung die Polarisationstrennung besser als 25 dB bei einer Gesamtlänge des Kopplungsbereichs von weniger als 500 µm.

Anhand der Zeichnungen werden Ausführungsbeispiele der Erfindung beschrieben. Es zeigen:
Fig. 1 Querschnitte durch eine erfindungsgemäße Anordnung mit einer Metallbeschichtung über dem Wellenleiterabschnitt,
Fig. 2 perspektivische Darstellung obiger Anordnung und
Fig. 3 eine erfindungsgemäße Anordnung mit einer Metallbeschichtung die den Wellenleiterabschnitt und den zweiten Wellenleiter im Koppelbereich überdeckt.

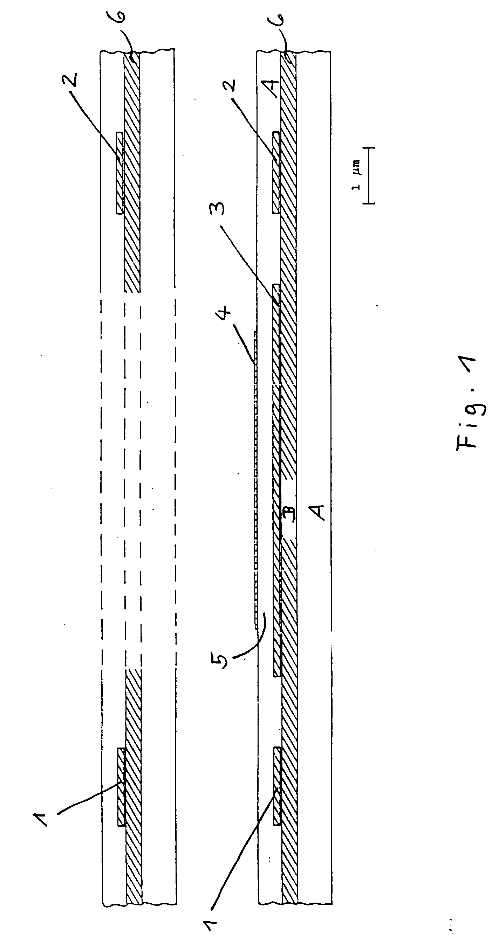

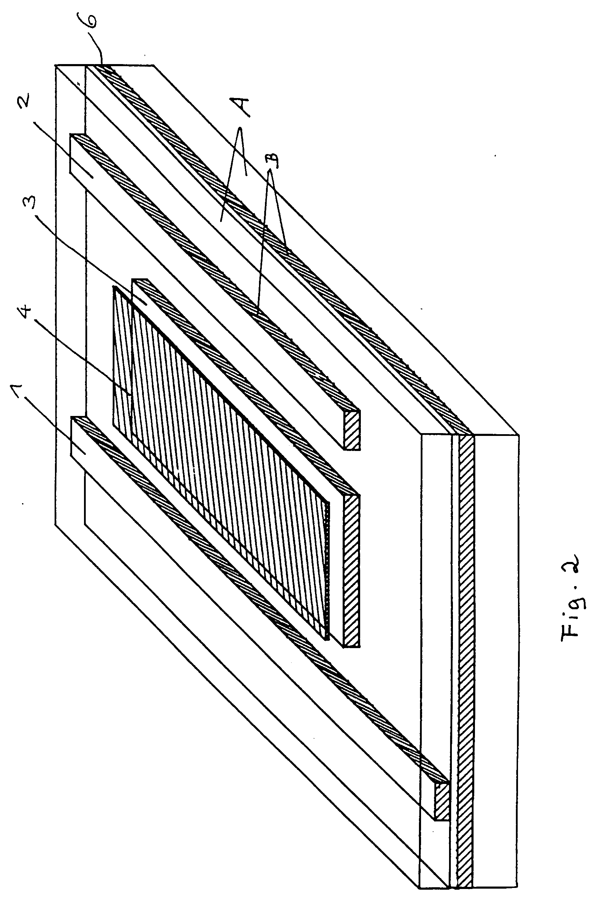

Die Figuren 1 und 2 zeigen einmal in zwei verschiedenen Querschnitten (Fig. 1) und einmal perspektivisch dargestellt (Fig. 2) eine Struktur aus InP (in den Figuren Material A) und InGaAsP (in Figuren Material B) mit einem streifenbelasteten Filmwellenleiter, wobei die Streifen vergraben sind. Es sind drei Streifen 1, 2 und 3 vorgesehen. Die Streifen bilden mit dem Filmwellenleiter 6 einen ersten Wellenleiter 1,6 der das Eingangssignal zum Koppelbereich führt und ein erstes Ausgangssignal der ersten Polarisation vom Koppelbereich wegführt. Der zweite Wellenleiter 2,6 führt ein zweites Ausgangssignal der zweiten Polarisation vom Koppelbereich weg. Der dritte Wellenleiterabschnitt 3,6 ist zwischen den beiden Wellenleitern 1,2 angeordnet. Er ist so angeordnet, daß die Koppelwelle des dritten Wellenleiterabschnitts 3 bei der gewünschten Koppelfrequenz phasensynchron mit den Wellen in den beiden anderen Wellenleitern 1,2 ist. Die Abstände zwischen den einzelnen Wellenleiter sind derart bemessen, daß der erste und der zweite Wellenleiter 1,2 jeweils nur mit dem dritten Wellenleiterabschnitt 3 koppeln. Über den Streifen 1,2,3 ist eine Pufferschicht 5 vorgesehen. Diese Pufferschicht 5 besteht im Ausführungsbeispiel aus InP. Über dem dritten Wellenleiterabschnitt 3 ist auf der Pufferschicht eine Metallschicht 4 angeordnet. Diese Metallschicht die aufgedampft oder aufgesputtert werden kann, kann beispielsweise aus drei verschiedenen Schichten mit der Abfolge Titan, Platin, Gold bestehen. Die Titanschicht ist dabei notwendig, um eine bessere Haftung auf der InP-Schicht zu erreichen. Geht man davon aus, daß ein optisches Eingangssignal mit zufälliger Polarisation in den Wellenleiter 1 eingekoppelt wird, in dem also HE-Wellen und EH-Wellen vorhanden sind, so wird die EH-Welle nur geringfügig in den dritten Wellenleiterabschnitt 3 übergekoppelt. Der Metallfilm senkt den effektiven Brechungsindex im mittleren Wellenleiterabschnitt für die EH-Wellen sehr stark ab. Der effektive Brechungsindex für HE-Wellen wird durch den Metallfilm kaum beeinflußt, so daß diese vollständig auf den mittleren Wellenleiter und von dort auf den zweiten Wellenleiter 2 überkoppeln können. Geht man davon aus, daß eine Anregung mit Einheitsleistung für die EH-Welle und für die HE-Welle im Wellenleiter 1 stattfindet, so ergibt sich hinter dem Koppelbereich im ersten Wellenleiter 1 für die EH-Welle ein Leistungsanteil von 97,5 % und für die HE-Welle ein Leistungsanteil von 0,1 % , was einem Verhältnis von 28 dB entspricht und im zweiten Wellenleiter ein Leistungsanteil von 90,9 % für die HE-Welle und von 0,2 % für die EH-Welle was einem Verhältnis von 26 dB entspricht.

In Figur 3 ist eine entsprechende Darstellung für vergrabene Rippenwellenleiter zu sehen. Es gibt wieder einen ersten Rippenwellenleiter 1 und einen zweiten Rippenwellenleiter 2, die jeweils 1,5 µm breit sind und einen Abstand von 10 µm aufweisen. Zwischen ihnen befindet sich der dritte Wellenleiterabschnitt 3, der 3,5 µm breit ist. Der Koppelbereich und somit auch der dritte Wellenleiterabschnitt 3 sind 1 mm lang. Koppelt man in den ersten Wellenleiter 1 ein Eingangssignal mit EH-Wellen und HE-Wellen ein, so wird die EH-Welle auch hinter dem Koppelbereich weiterhin im ersten Wellenleiter 1 geführt, während die HE-Welle auf den zweiten Wellenleiter 2 überkoppelt. Im in Figur 3 angegebenen Beispiel ist nicht nur der dritte Wellenleiterabschnitt 3 von der Metallschicht 4 abgedeckt, sondern auch der zweite Wellenleiter 2. Dadurch wird eine Überkopplung der EH-Welle auf den zweiten Wellenleiter aufgrund der kaskadierten Anordnung noch stärker vermieden. Auch hier befindet sich zwischen der Metallschicht 4 und den Wellenleitern eine Pufferschicht 5. Während die Dicke des Films und der Rippen jeweils ungefähr 0,3 µm beträgt, ist die Dicke der Pufferschicht im Bereich zwischen ca. 0,1 und 1,0 µm zu bemessen. Die Dicke der Pufferschicht beeinflußt wesentlich die Koppeleigenschaften der EH-Welle und die Dämpfung der EH- und HE-Wellen.

Eine Anwendung kann eine solche Polarisationsweiche beispielsweise in optischen Überlagerungsempfängern mit Polarisationsdiversity finden.

## Patentansprüche

1. Integriert optische Anordnung zum Zerlegen eines optischen Eingangssignals einer bestimmten Wellenlänge in zwei Signale mit zueinander orthogonaler Polarisation, bestehend aus zwei miteinander gekoppelten Wellenleitern (1,2), zwischen denen in einem Koppelbereich ein Wellenleiterabschnitt (3) angeordnet ist, mit folgenden Merkmalen:
a) der erste Wellenleiter (1) führt das Eingangssignal zum Koppelbereich und führt ein erstes Ausgangssignal der ersten Polarisation vom Koppelbereich weg,
b) der zweite Wellenleiter (2) führt ein zweites Ausgangssignal der zweiten Polarisation vom Koppelbereich weg,
c) der erste und zweite Wellenleiter (1,2) sind jeweils nur mit dem Wellenleiterabschnitt (3) verkoppelt,
d) eine Koppelwelle des Wellenleiterabschnitts (3) ist bei der bestimmten Wellenlänge phasensynchron mit den Wellen in den beiden Wellenleitern (1,2),
e) es ist eine Beschichtung (4) aus einem leitenden Material vorgesehen, die zumindest den Wellenleiterabschnitt (3) zu großen Teilen überdeckt und höchstens den Wellenleiterabschnitt (3) und den zweiten Wellenleiter (2) im Koppelbereich sowie den dazwischenliegenden Bereich ganz überdeckt.

2. Anordnung nach Anspruch 1, bei der die Beschichtung (4) deckungsgleich zum Wellenleiterabschnitt (3) ist.

3. Anordnung nach einem der Ansprüche 1 oder 2, bei der sich zwischen dem Wellenleiterabschnitt (3) und der Beschichtung (4) eine Pufferschicht (5) befindet.

4. Anordnung nach einem der Ansprüche 1 bis 3, bei der die Wellenleiter (1,2,3) in InP/InGaAsP-Technik hergestellt sind.

5. Anordnung nach einem der Ansprüche 1 bis 4, bei der die Beschichtung (4) aus einem Metall, beispielsweise Gold, besteht.

6. Anordnung nach Anspruch 5, bei der die Beschichtung aus Metall durch Aufdampfen oder Aufsputtern aufgebracht ist.

7. Anordnung nach einem der Ansprüche 1, 3 bis 6, bei der die Beschichtung (4) symmetrisch aufgebaut ist und nur den mittleren Wellenleiterabschnitt (3) teilweise überdeckt.

## Claims

1. Integrated optical arrangement for decomposing an optical input signal of a specific wavelength into two signals with mutually orthogonal polarizations, comprising two mutually coupled waveguides (1, 2) between which a waveguide section (3) is arranged in a coupling region, having the following features:
a) the first waveguide (1) leads the input signal to the coupling region and leads a first output signal of the first polarization away from the coupling region,
b) the second waveguide (2) leads a second output signal of the second polarization away from the coupling region,
c) the first and second waveguides (1, 2) are respectively coupled only to the waveguide section (3),
d) a coupling wave of the waveguide section (3) is synchronized in phase at the specific wavelength with the waves in the two waveguides (1, 2) and
e) a coating (4) made from a conducting material is provided which covers at least large parts of the waveguide section (3) and completely covered at most the waveguide section (3) and the second waveguide (2) in the coupling region as well as the region situated therebetween.

2. Arrangement according to Claim 1, in which the coating (4) is congruent with the waveguide section (3).

3. Arrangement according to one of Claims 1 or 2, in which a buffer layer (5) is located between the waveguide section (3) and the coating (4).

4. Arrangement according to one of Claims 1 to 3, in which the waveguides (1, 2, 3) are produced using InP/InGaAsP technology.

5. Arrangement according to one of Claims 1 to 4, in which the coating (4) consists of a metal, for example gold.

6. Arrangement according to Claim 5, in which the coating made from metal is applied by vapour deposition or sputtering.

7. Arrangement according to one of Claims 1, 3 to 6, in which the coating (4) is of symmetrical design and partly covers only the middle waveguide section (3).

## Revendications

1. Dispositif optique intégré pour décomposer un signal optique d'entrée d'une certaine ligne d'ondes en deux signaux ayant des polarisations orthogonales,
ce dispositif se composant de deux guides d'ondes (1, 2) à contre-couplage entre lesquels se trouve une zone de couplage avec un segment de guide d'ondes (3) et ayant les caractéristiques suivantes
a) le premier guide d'ondes (1) conduit le signal d'entrée vers la plage de couplage et évacue de la zone de couplage un premier signal de sortie ayant une première polarisation,
b) le second guide d'ondes (2) conduit un second signal de sortie de seconde polarisation provenant de la plage de couplage,
c) le premier et le second guide d'ondes (1, 2) sont couplés chaque fois seulement au segment de guide d'ondes (3),
d) une onde de couplage du segment de guide d'ondes (3), pour une longueur d'onde définie, est en synchronisme de phase avec les ondes des deux guides d'ondes (1, 2),
e) une enduction (4) en matière conductrice recouvre au moins en grande partie le segment de guide d'ondes (3) et au plus le segment de guide d'ondes (3) et le second guide d'ondes (2), totalement dans la plage de couplage ainsi que dans la zone intermédiaire.

2. Dispositif selon la revendication 1,
caractérisé en ce que
l'enduction (4) est égale au segment du guide d'ondes (3).

3. Dispositif selon l'une des revendications 1 ou 2,
selon lequel
une couche tampon (5) est prévue entre le segment de guide d'ondes (3) et l'enduction (4).

4. Dispositif selon l'une des revendications 1 à 3,
selon lequel
les guides d'ondes (1, 2, 3) sont fabriqués en technique InP/InGaAsP.

5. Dispositif selon l'une des revendications 1 à 4,
selon lequel
l'enduction (4) est en métal, par exemple en or.

6. Dispositif selon la revendication 5,
selon lequel
l'enduction en métal est réalisée par dépôt à la vapeur ou pulvérisation.

7. Dispositif selon l'une des revendications 1, 3 à 6,
selon lequel
l'enduction (4) est symétrique et ne recouvre que partiellement le segment intermédiaire de guide d'ondes (3).
